(19) Europäisches Patentamt
European Patent Office
Office européen des brevets

(11) **EP 2 637 982 B1**

(12) **EUROPEAN PATENT SPECIFICATION**

(45) Date of publication and mention
of the grant of the patent:
**06.01.2021 Bulletin 2021/01**

(51) Int Cl.:
***C03C 25/32*** *(2018.01)*     ***D04H 13/00*** *(2006.01)*
***D04H 1/72*** *(2012.01)*

(21) Application number: **11782412.8**

(22) Date of filing: **09.11.2011**

(86) International application number:
**PCT/EP2011/069735**

(87) International publication number:
**WO 2012/062801 (18.05.2012 Gazette 2012/20)**

(54) **MINERAL FIBRE PRODUCT HAVING REDUCED THERMAL CONDUCTIVITY**

MINERALFASERPRODUKT MIT VERRINGERTER WÄRMELEITFÄHIGKEIT

PRODUIT EN FIBRES MINÉRALES PRÉSENTANT UNE CONDUCTIVITÉ THERMIQUE RÉDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2010 US 411644 P
09.11.2010 EP 10190521**

(43) Date of publication of application:
**18.09.2013 Bulletin 2013/38**

(73) Proprietor: **Rockwool International A/S
2640 Hedehusene (DK)**

(72) Inventors:
• **DE KUBBER, Daan Louis
NL-6041 XR Roermond (NL)**
• **LYBYE, Dorthe
DK-4000 Roskilde (DK)**

(74) Representative: **Held, Stephan
Meissner Bolte Patentanwälte
Rechtsanwälte Partnerschaft mbB
Widenmayerstraße 47
80538 München (DE)**

(56) References cited:
**WO-A1-98/56723**     **WO-A1-2010/023060**
**US-A- 2 702 069**     **US-A- 5 157 074**
**US-A1- 2009 005 517**

**Description**

Field of the Invention

The present invention relates to a method for manufacturing said bonded mineral fibre product.

Background of the Invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

For the production of high-density mineral fibre products, e.g., roof boards, the binder-loaded mats are compressed, optionally after having been pleated to a multi-layer composite, and cured in a curing oven.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, FP-A-1741726, US-A-5,318,990 and US-A-2007/0173588.

Another group of non-phenol-formaldehyde binders are the addition/-elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249.

US-A-4904522 discloses a process for producing fiberglass mats using an aqueous polyisocyanate emulsion in the absence of waterglass. The dispersions are applied to the fiberglass through nozzles, the fiberglass having been made with a mineral fiber spinning machine.

The US 2009/005517 A1 discloses a process for making a polyisocyanurate composite which process comprises combining a polyisocyanate, a polyether polyol and a trimerization catalyst with a to-be-bonded material to form a reactive composite.

The WO 2010/023060 A1 discloses an isocyanurate-reactive mixture obtained by reacting an anhydride and a polyol.

The US 5 157 074 A discloses an aqueous composition containing a) an at least partially blocked, aqueously dispersed polyisocyanate i) having an isocyanate content prior to blocking of at least 12% by weight, based on the weight of the unblocked polyisocyanate and ii) containing at least 2 equivalent percent, based on the total equivalents of isocyanate groups, of blocked isocyanate groups, and b) a trimerization catalyst.

Summary of the Invention

It has now surprisingly been found that use of a polyisocyanurate-based binder in the manufacture of a bonded mineral fibre product results in an unexpected decrease in thermal conductivity compared to insulation products manufactured from other mineral wool binders.

Furthermore, a novel method for manufacturing mineral fibre-containing products and elements has been developed which allows production of mineral fibre products and elements of improved mechanical strength which exhibit a homogeneous structure having a more even distribution of components.

Thus, disclosed is a bonded mineral fibre product having reduced thermal conductivity which comprises man-made vitreous fibres (MMVF) bound by a poiyisocyanurate-based binder.

The present invention relates to a method for manufacturing a bonded mineral fibre product having reduced thermal conductivity, said method comprising the steps of:

    providing mineral fibres in the form of a collected web,
    subjecting the collected web of fibres to a disentanglement process, suspending the fibres in a primary air flow,
    mixing a polyisocyanurate-forming binder composition with the mineral fibres before, during or after the disentanglement process to form a mixture of mineral fibres and binder,
    collecting the mixture of mineral fibres and binder, and
    pressing and curing the mixture to provide a consolidated composite of mineral fibres bonded with a polyisocyanurate-based binder.

It has been found that by subjecting the mineral fibres to a fibre disentanglement process, compacted mineral fibres are opened up and the mineral fibres and binder are more evenly distributed in the element produced. This increased homogeneity in the element results generally in an increased level of mechanical strength relative to insulation products of the prior art. The even distribution of fibres and binder in the products obtained also has a desirable effect on the insulation properties of the product.

Detailed Description and Preferred Embodiments

The bonded mineral fibre product comprises man-made vitreous fibres (MMVF) bound by a polyisocyanurate-based binder.
Generally, polyisocyanurate-based binders are formed by trimerization of a polyisocyanate in the presence of a trimerization catalyst. Optionally, at least one further reactant selected from polyols , chain extenders, water, and mixtures thereof, is employed. See, for instance, WO 00/29459, WO 04/111101, WO 06/008780, WO 07/42407, WO 07/42411, WO 07/96216, WO 07/144291, WO 2010/023060, US 4336341, US 4540781, US 6509392, US 2002/0045690 A1, EP 304005 A1, EP 1004607 A1, JP 57-131276 A2, JP 58-011529 A2, JP 58-034832 A2, JP 58-145431 A2, JP 62-081590 A2.
A currently preferred polyisocyanurate-forming binder composition is a two-component binder composition with the first component comprising an emulsifiable polyisocyanate and the second component being an aqueous mixture containing a catalyst system, surfactants and silane coupling agents.
Preferably, the polyisocyanurate-forming binder composition does not comprise water glass.
In the context of the present invention, the following terms have the following meaning:

1) isocyanate index or NCO index or index : the ratio of NCO-groups over isocyanate-reactive hydrogen atoms from polyols having an equivalent weight of 100 to 2500 present in a composition, given as a percentage :

$$\frac{[NCO] \times 100}{[active\ hydrogen\ ]}\quad (\%),$$

The NCO-index expresses the percentage of isocyanate actually used in a formulation with respect to the amount of isocyanate theoretically required for reacting with the amount of isocyanate-reactive hydrogen from said polyols used in a formulation. It should be observed that the isocyanate index as used herein is considered from the point of view of the actual polymerisation process preparing the material involving the isocyanate and the polyol. Any isocyanate groups consumed in a preliminary step to produce modified polyisocyanates (including such isocyanate-derivatives referred to in the art as prepolymers) are not taken into account in the calculation of the isocyanate index. Only the free isocyanate groups and the free isocyanate-reactive hydrogens (of said polyols) present at the actual polymerisation stage are taken into account.

2) The expression "isocyanate-reactive hydrogen atoms" as used herein for the purpose of calculating the isocyanate index refers to the total of active hydrogen atoms in hydroxyl groups present in the polyol; this means that for the purpose of calculating the isocyanate index at the actual polymerisation process one hydroxyl group is considered to comprise one reactive hydrogen.

3) The expression "polyisocyanurate" as used herein refers to non-cellular products as obtained by reacting the mentioned polyisocyanates and polyols in the presence of trimerization catalysts at a high index.

4) The term "average nominal hydroxyl functionality" is used herein to indicate the number average functionality (number of hydroxyl groups per molecule) of the polyol or polyol composition on the assumption that this is the number average functionality (number of active hydrogen atoms per molecule) of the initiator(s) used in their preparation.

5) The word "average" refers to number average unless indicated otherwise.

6) A trimerization catalyst is a catalyst enhancing the formation of polyisocyanurate groups from polyisocyanates.

Mineral fibre-polyisocyanurate composites may be produced by a process which comprises combining a polyisocyanate, a polyol and a trimerization catalyst, these three ingredients collectively being referred to as 'reactive binder composition', with the mineral fibres to be bonded to form a reactive composite, and allowing in a next step this reactive composite to react at elevated temperature, wherein the amount of the polyisocyanate and the polyol is such that the index of the reactive binder composition is 150 - 15000, preferably 250 - 10000.

The polyisocyanate may be chosen from aliphatic, cycloaliphatic, araliphatic and, preferably, aromatic polyisocyanates, such as toluene diisocyanate in the form of its 2,4 and 2, 6 -isomers and mixtures thereof, diphenylmethane diisocyanates and variants thereof, and mixtures of diphenylmethane diisocyanates (MDI) and oligomers thereof having an isocyanate functionality greater than 2 known in the art as "crude" or polymeric MDI (polymethylene polyphenylene polyisocyanates).

Mixtures of toluene diisocyanate, diphenylmethane diisocyanates and/or polymethylene polyphenylene polyisocyanates may be used as well. Preferably the polyisocyanate consists of a) 70-100% and more preferably 80-100% by weight of diphenylmethane diisocyanate comprising at least 40%, preferably at least 60% and most preferably at least 85% by weight of 4,4 '-diphenylmethane diisocyanate and/or a variant of said diphenylmethane diisocyanate which variant has an NCO value of at least 20% by weight (polyisocyanate a), and b) 30-0% and more preferably 20-0% by weight of another polyisocyanate (polyisocyanate b).

Preferably this polyisocyanate a) is selected from 1) a diphenylmethane diisocyanate comprising at least 40%, preferably at least 60% and most preferably at least 85% by weight of 4,4 '-diphenylmethane diisocyanate and the following preferred variants of such diphenylmethane diisocyanate: 2) a carbodiimide and/or uretonimine modified variant of polyisocyanate 1), the variant having an NCO value of 20% by weight or more; 3) a urethane modified variant of polyisocyanate 1), the variant having an NCO value of 20% by weight or more and being the reaction product of an excess of polyisocyanate 1) and of a polyol having an average nominal hydroxyl functionality of 2-4 and an average molecular weight of at most 1000; 4) a prepolymer having an NCO value of 20% by weight or more and which is the reaction product of an excess of any of the aforementioned polyisocyanates 1-3) and of a polyol having an average nominal functionality of 2-6, an average molecular weight of 2000-12000 and preferably an hydroxyl value of 15 to 60 mg KOH/g, and 5) mixtures of any of the aforementioned polyisocyanates. Polyisocyanates 1) and 2) and mixtures thereof are preferred. Polyisocyanate 1) comprises at least 40% by weight of 4,4'-MDI. Such polyisocyanates are known in the art and include pure 4,4'-MDI and isomeric mixtures of 4,4'-MDI and up to 60% by weight of 2,4'-MDI and 2,2'-MDI. It is to be noted that the amount of 2,2'- MDI in the isomeric mixtures is rather at an impurity level and in general will not exceed 2% by weight, the remainder being 4,4'-MDI and 2,4'-MDI. Polyisocyanates as these are known in the art and commercially available; for example Suprasec® 1306 ex Huntsman. The carbodiimide and/or uretonimine modified variants of the above polyisocyanate 1) are also known in the art and commercially available; e.g. Suprasec® 2020, ex Huntsman. Urethane modified variants of the above polyisocyanate 1) are also known in the art, see e.g. The ICI Polyurethanes Book by G. Woods 1990, 2nd edition, pages 32-35. Aforementioned prepolymers of polyisocyanate 1) having an NCO value of 20% by weight or more are also known in the art. Preferably the polyol used for making these prepolymers is selected from polyester polyols and polyether polyols and especially from polyoxyethylene polyoxypropylene polyols having an average nominal functionality of 2- 4, an average molecular weight of 2500-8000, and preferably an hydroxyl value of 15-60 mg KOH/g and preferably either an oxy ethylene content of 5-25% by weight, which oxyethylene preferably is at the end of the polymer chains, or an oxyethylene content of 50-90% by weight, which oxyethylene preferably is randomly distributed over the polymer chains.

Mixtures of the aforementioned polyisocyanates may be used as well, see e.g. The ICI Polyurethanes Book by G. Woods 1990, 2nd edition pages 32-35. An example of such a commercially available polyisocyanate is Suprasec 2021® ex Huntsman. The other polyisocyanate b) may be chosen from aliphatic, cycloaliphatic, araliphatic and, preferably, aromatic polyisocyanates, such as toluene diisocyanate in the form of its 2,4 and 2,6-isomers and mixtures thereof and oligomers of diphenylmethane diisocyanate (MDI) having an isocyanate functionality greater than 2. Mixtures of MDI and these oligomers are known in the art as "crude" or polymeric MDI (polymethylene polyphenylene polyisocyanates). Mixtures of toluene diisocyanate and polymethylene polyphenylene polyisocyanates may be used as well.

When polyisocyanates are used which have an NCO functionality of more than 2, the amount of such polyisocyanate used is such that the average NCO functionality of the total polyisocyanate used in the present invention is 2.0-2.2 preferably. The polyisocyanates used in the present invention preferably are liquid at 25°C.

The polyols used preferably have an average equivalent weight of 100-2500 and an average nominal hydroxyl functionality of 2-8. Such polyols may be selected from polyester polyols, polyether polyols, polyester-amide polyols, polycarbonate polyols, polyacetal polyols and mixtures thereof. Preferably polyether polyols are used, like polyoxyethylene polyols, polyoxypropylene polyols, polyoxybutylene polyols and polyether polyols comprising at least two different oxyalkylene groups, like polyoxyethylene polyoxypropylene polyols, and mixtures thereof. Polyols comprising at least two different oxyalkylene groups may be block copolymers or random copolymers or combinations thereof.

The most preferred polyether polyols used have an average nominal hydroxyl functionality of 2-4, an average equivalent weight of 100-2500, an oxyethylene content of at least 50 % by weight and preferably of at least 65 % by weight (on the weight of the polyether polyol). More preferably such polyether polyols have a primary hydroxyl group content of at least 40 % and more preferably of at least 65 % (calculated on the number of primary and secondary hydroxyl groups). They may contain other oxyalkylene groups like oxypropylene and/or oxybutylene. Mixtures of these most preferred polyols may be used, No other polyols or other isocyanate-reactive compounds (than these most preferred polyether polyols) having an average equivalent weight of 100-2500 are used preferably. Such polyols are known in the art and commercially available; examples are Caradol® 3602 from Shell, Daltocel® F526, F442, F444 and F555 and Jeffox® WL 440, WL 590 and WL 1400 from Huntsman.

Any compound that catalyses the isocyanate trimerization reaction (isocyanurate-formation) can be used as trimerization catalyst in the process, such as tertiary amines, triazines and most preferably metal salt trimerization catalysts. The metal salt trimerization catalyst is a carboxylate, the carboxylate group having 1-12 carbon atoms. Such catalysts are selected from alkali metal carboxylates, quaternary ammonium carboxylates and mixtures thereof, the carboxylate group having 1-12 carbon atoms. Examples of suitable metal salt trimerization catalysts are alkali metal salts of organic carboxylic acids. Preferred alkali metals are potassium and sodium, and preferred carboxylic acids are acetic acid and 2-ethylhexanoic acid. Most preferred metal salt trimerization catalysts are potassium acetate, potassium hexanoate, potassium 2-ethylhexanoate, potassium octoate, potassium lactate, N-hydroxypropyl trimethyl ammonium octoate, N- hydroxypropyl trimethyl ammonium formate and mixtures. Two or more different trimerization catalysts can be used.

The metal salt trimerization catalyst is generally used in an amount of 0.01-5% by weight based on the weight of the polyisocyanate and the polyol, preferably 0.05-3% by weight. It may occur that the polyisocyanate and/or the polyol used in the process still contains metal salt from its preparation which may then be used as the trimerization catalyst or as part of the trimerization catalyst.

The polyisocyanate, the polyol and the trimerization catalyst may be combined with the mineral fibres to be bonded in any order. Preferably, the polyisocyanate, the polyol and the trimerization catalyst are combined in an initial step so as to form a reactive binder composition, which in a next step is combined with the mineral fibres. The preparation of the reactive binder composition may be done by combining and mixing the polyisocyanate, the polyol and the catalyst in any order, preferably at an initial temperature between 5°C and 40°C and more preferably between 10°C and 30°C. Preferably the polyol and the catalyst are combined and mixed first, followed by combining and mixing with the polyisocyanate. The combining and mixing of the polyisocyanate and the other ingredients preferably is conducted at ambient pressure and at a temperature between 5°C and 45°C and more preferably between 5°C and 30°C in order to avoid undesired premature reactions as much as possible. As mentioned before, the catalyst may already be present in the polyisocyanate and/or the polyol in a sufficient amount. In that case only the polyisocyanate and the polyol need to be combined and mixed.

Optionally further ingredients and additives may be used in the polyisocyanate and binder composition such as, for instance, surfactants; catalysts enhancing the formation of urethane bonds, like tin catalysts like tin octoate and dibutyltindilaurate, tertiary amine catalysts like triethylenediamine and imidazoles like dimethylimidazole; fire retardants; smoke suppressants; UV-stabilizers; colorants; microbial inhibitors; degassing and defoaming agents; plasticizers and internal mould release agents.

Still further isocyanate-reactive chain extenders and cross-linkers having an average equivalent weight below 100 may be used, like ethylene glycol, diethylene glycol, propylene glycol, dipropylene glycol, butane diol, hexane diol, glycerol, trimethylol propane, sucrose and sorbitol. These chain extenders and cross-linkers preferably are not used or only to the extent as necessary in view of the fact that commercial grades of catalyst may contain such chain extenders and/or cross linkers. If used these chain extenders and/or cross linkers are not taken into account in calculating the aforementioned index: additional polyisocyanate is to be used to compensate for the active hydrogens in these chain extenders and cross-linkers.

The amount of binder is chosen on the basis of desired cohesion, strength and cost, plus properties such as reaction to fire and thermal insulation value. The lower limit of 1 wt % results in a composite with a lower strength and cohesion, which is however adequate for some applications, and has the benefit of relatively low cost and potential for good thermal and acoustic insulation properties. In applications where a high mechanical strength is needed, a higher amount of binder should be used, such as up to 30 wt %. For a majority of applications, a suitable composition will include a binder amount from 1 to 30 wt %, preferably from 1 to 20 wt% and, most usually, from 4 to 15 wt %.

Once the polyisocyanate and/or the binder composition has been prepared it may be allowed to react, preferably at an elevated temperature so as to form a polyisocyanurate. This next step is more preferably conducted at a temperature between 50°C and 350°C and most preferably between 70°C and 280°C. This reaction may take between 5 seconds and 10 hours and preferably takes between 15 seconds and 2 hours. The process may be conducted at ambient pressure or at reduced or elevated pressure.

Applying the reactive binder composition to the mineral fibres to be bonded may be conducted by coating, impregnating, mixing and spraying of the binder composition and combinations thereof and/or any other suitable way which ensures thorough contact between the reactive binder composition and mineral fibre material.

The mineral fibres (also known as man-made vitreous fibres or MMVF) could be any mineral fibres, including glass fibres, ceramic fibres or stone fibres, but preferably stone fibres are used. Stone wool fibres generally have a content of iron oxide at least 3% and alkaline earth metals (calcium oxide and magnesium oxide) from 10 to 40%, along with the other usual oxide constituents of mineral wool. These are silica; alumina; alkali metals (sodium oxide and potassium oxide) which are usually present in low amounts; and can also include titania and other minor oxides. Fibre diameter is often in the range 3 to 20 microns, in particular 5 to 10 microns, as conventional.

In one embodiment, the mineral fibres include glass fibres preferably in an amount up to 20%, more preferably up to 15% and most preferably up to 10% of the total weight of starting materials. The remaining mineral fibres are preferably stone fibres. The glass fibres preferably have a length of from 10mm to 50mm, more preferably from 15mm to 40mm and most preferably from 20mm to 30mm. These glass fibres serve to reinforce the composite.

Preferably, the mineral fibres and binder together form at least 96%, more preferably at least 98% and most preferably substantially all of the total weight of starting materials.

The percentages mentioned herein are based on dry weight of solids.

In a preferred embodiment of the present invention, the bonded mineral fibre product is produced by a method comprising the steps of:

> providing mineral fibres in the form of a collected web,
> subjecting the collected web of fibres to a disentanglement process, suspending the fibres in a primary air flow,
> mixing the polyisocyanurate-forming binder composition with the mineral fibres before, during or after the disentanglement process to form a mixture of mineral fibres and binder,
> collecting the mixture of mineral fibres and binder, and
> pressing and curing the mixture to provide a consolidated composite of mineral fibres bonded with a polyisocyanurate-based binder.

As used herein, the term "collected web" is intended to include any mineral fibres that have been collected together on a surface, i.e. they are no longer entrained in air, e.g. granulate, tufts or recycled web waste. The collected web could be a primary web that has been formed by collection of fibres on a conveyor belt and provided as a starting material without having been cross-lapped or otherwise consolidated. Alternatively, the collected web could be a secondary web that has been formed by crosslapping or otherwise consolidating a primary web. Preferably, the collected web is a primary web.

In one embodiment, the binder is supplied in the close vicinity of the fibre forming apparatus, such as a cup spinning apparatus or a cascade spinning apparatus, in either case immediately after the fibre formation. The fibres with applied binder are thereafter conveyed onto a conveyor belt as a web into a curing oven where the curing process takes place. The web may be subjected to longitudinal or length compression after the fibre formation and before the curing oven. The curing process is predominantly a process which forms polyisocyanurates from the polyisocyanurate-forming binder composition. The curing time may be from 1 to 25 minutes such as 2 to 25 minutes, and the curing temperature may be from 120°C to 250°C, such as 120°C to 200°C.

In one embodiment, the disentanglement process comprises feeding the web of mineral fibres from a duct with a lower relative air flow to a duct with a higher relative air flow. In this embodiment, the disentanglement is believed to occur, because the fibres that enter the duct with the higher relative air flow first are dragged away from the subsequent fibres in the web. This type of disentanglement is particularly effective for producing open tufts of fibres, rather than the compacted lumps that can result in an uneven distribution of materials in the product.

Preferably, the speed of the higher relative air flow is from 20 m/s to 150 m/s or from 30 m/s to 120 m/s. More preferably it is from 40 m/s to 80 m/s and most preferably from 50 m/s to 70 m/s. The higher relative air flow can be separate from the primary air flow, but more usually, it will feed into the primary air-flow.

Preferably, the difference in speed between the lower relative air flow and the higher relative air flow is at least 20 m/s, more preferably at least 40 m/s and most preferably at least 50 m/s.

As used herein, the term "air flow" should be understood broadly so as to include not only a flow of air comprising gases in the proportions present in the atmosphere of Earth, but also a flow of any suitable gas or gases in any suitable proportions.

According to a particularly preferred embodiment, the disentanglement process comprises feeding the collected web to at least one roller which rotates about its longitudinal axis and has spikes protruding from its circumferential surface. In this embodiment, the rotating roller will usually also contribute at least in part to the higher relative air flow. Often, rotation of the roller is the sole source of the higher relative air flow.

In some embodiments there are at least two rollers. These rollers may operate in tandem or sequentially.

The roller may be of any suitable size, but in a preferred embodiment, the roller has a diameter based on the outermost points of the spikes of from 20 cm to 80 cm or more preferably from 30 cm to 70 cm. Even more preferably the diameter is from 40 cm to 60 cm and most preferably from 45 cm to 55 cm.

The roller may rotate at any suitable speed. For most embodiments a suitable rate of rotation for the roller is from 500 rpm to 5000 rpm, preferably from 1000 rpm to 4000 rpm, more preferably from 1500 rpm to 3500 rpm, most preferably from 2000 rpm to 3000 rpm.

The dimensions and rate of rotation of the roller can be selected to provide a given speed at the circumference of the roller. In general, a high speed will result in a more effective disentanglement process, although this will depend on the type of web of mineral fibres used and the exact form of the roller. In most embodiments it will be suitable for the outermost points of the spikes of the roller to move at a speed of from 20 m/s to 150 m/s, preferably from 30 m/s to 120 m/s, more preferably from 40 m/s to 80 m/s and most preferably from 50 m/s to 70 m/s.

The roller is preferably positioned within a substantially cylindrical chamber. The chamber will have an inlet through which the mineral fibres and optionally the binder are fed to the roller. The chamber will also have an outlet through which the disentangled mineral fibres and optionally the binder are expelled. Preferably, they are expelled in the primary air flow through the outlet.

In preferred embodiments, the mineral fibres and optionally the binder are fed to the roller from above. It is also preferred for the disentangled mineral fibres and optionally the binder to be thrown away from the roller laterally from the lower part of its circumference. In the most preferred embodiment, the mineral fibres are carried approximately 180 degrees by the roller before being thrown off.

The roller preferably occupies the majority of the chamber. Preferably the tips of the spikes are less than 10 cm, more preferably less than 7 cm, and most preferably less than 4 cm from the curved wall of the substantially cylindrical chamber. This results in the air flow created by the roller being greater and a more thorough disentanglement of the fibres by the air flow and by the spikes themselves.

Preferably, the mineral fibres are fed to the roller from above.

The disentangled fibres are generally thrown off the roller in the primary air flow. In some embodiments, the roller will contribute to the primary air flow. In other embodiments, the roller will be the sole source of the primary air flow.

According to the invention, the fibres are suspended in a primary air flow. An advantage of suspending in an air flow is that unwanted particles or agglomerations can be sifted out. Such particles are e.g. pearls of the fibres and agglomerations such as *inter alia* heavy chunks of wool, which have not been properly opened up to fibres, such as so-called chewing gum.

The primary air flow is generally not free from turbulence. In preferred embodiments, there is significant turbulence within the primary air flow as this promotes opening of the tufts of fibres and can improve sifting of unwanted particles and agglomerates. According to the present invention, the speed of the primary air flow at its source is preferably from 20 m/s to 150 m/s, more preferably from 30 m/s to 120 m/s, even more preferably from 40 m/s to 80 m/s and most preferably from 50 m/s to 70 m/s.

The primary air flow preferably enters a sifting chamber. In the sifting chamber, turbulence within the primary air flow allows denser particles to be sifted to the bottom of the chamber and promotes opening of the tufts of fibres.

In order to effect a thorough sifting of the fibres, it is preferred to configure the apparatus such that the average dwell time of the fibres within the sifting chamber is at least 0.5 s, more preferably at least 2 s, or even at least 3 s.

However, it is usually not necessary for the average dwell time of the fibres within the sifting chamber to be greater than 10 s. More usually, the average dwell time is less than 7 s and most usually the average dwell time is less than 5 s.

The ambient temperature within the sifting chamber, when used, is usually from 20°C to 100°C, more usually from 30°C to 70°C. The temperature could be dependent on outside air temperature, i.e. cold in winter and hot in summer. Elevated temperatures of up to 100°C could be used for providing a pre-curing of the binder in the sifting chamber.

The binder may be mixed with the mineral fibres before, during or after the disentanglement process. In some embodiments, it is preferred to mix the binder with the fibres prior to the disentanglement process. In particular, the fibres can be in the form of an uncured collected web containing binder.

It is also feasible that the binder be pre-mixed with a collected web of mineral fibres before the disentanglement process. Further mixing could occur during and after the disentanglement process. Alternatively it could be supplied to the primary air flow separately and mixed in the primary air flow.

The mineral fibres and binder, when suspended in the primary air flow, are, in some embodiments, subjected to a further air flow in a different direction to the primary air flow. This helps to generate further turbulence in the primary air flow, which assists mixing, sifting and opening of the tufts of fibres.

Usually the primary air flow is generally lateral and the further air flow is generally upwards. In some embodiments, a plurality of further air flows is provided. Preferably the further air flow has a speed of from 1 to 20 m/s, more preferably from 1 to 13 m/s, even more preferably from 2 to 9 m/s and most preferably from 3 to 7 m/s.

The mixture of mineral fibres and binder is collected from the primary air flow by any suitable means. In one embodiment, the primary air flow is directed into the top of a cyclone chamber, which is open at its lower end and the mixture is collected from the lower end of the cyclone chamber.

In an alternative embodiment, the primary air flow is directed through a foraminous surface, which catches the mixture as the air flow passes through.

Preferably, the mixture of mineral fibres and binder is subjected to a further fibre disentanglement process after the mixture has been suspended in the primary air flow, but before the mixture is pressed and cured. The further disentanglement process may have any of the preferred features of the disentanglement process described previously.

In a particularly preferred method, the mixture of mineral fibres and binder is removed from the primary air flow, preferably in a cyclone chamber, and fed to a rotating roller having spikes protruding from its circumferential surface. The roller of the further disentanglement means may have any of the features described above in relation to the roller to which the collected web can be fed initially.

The mixture of mineral fibres and binder is preferably thrown from the further disentanglement process into a forming chamber.

Having undergone the further disentanglement process, the mixture of mineral fibres and binder is collected, pressed and cured. Preferably, the mixture is collected on a foraminous conveyor belt having suction means positioned below it.

In a preferred method according to the invention, the mixture of binder and mineral fibres, having been collected, is scalped before being cured and pressed,

The method may be performed as a batch process, however according to an embodiment the method is performed at a mineral wool production line feeding a primary or secondary mineral wool web into the fibre separating process, which provides a particularly cost efficient and versatile method to provide composites having favourable mechanical properties and thermal insulation properties in a wide range of densities.

According to a special embodiment the method is performed as an on-line process in a mineral wool production line.

Once the mixture of mineral fibres and binder has been collected, it is pressed and cured to produce an element of the desired density. Pressure, temperature and holding time for the curing and pressing are dependent *inter alia* on the type of binder used.

An aspect of the invention relates to a mineral fibre-containing element obtainable by the method of the invention. The element is preferably substantially homogeneous. By the wording "substantially homogeneous" it should be understood that the composite is homogeneous at a millimetre scale, i.e. in a microscope an area of e.g. 1 mm$^2$ is (substantially) identical to other samples of the mixture.

It has also been found that the composites of the present invention as a result of their homogeneity can be machinable in a similar way to wood. By "machinable" it should be understood that the composite can be machined in ordinary wood forming machinery, such as saws and shaping machines, e.g. grooving machines, surface milling cutters etc.

The elements produced by the method of the invention have a variety of uses, predominantly as building elements. In particular, the products can be in the form of panels. In general, the products are used in applications where mechanical stability and an even surface finish as well as insulating properties are important. In some applications, the panels can be used as acoustically absorbing ceiling or wall panels. In other applications, the panels can be used as insulating outer cladding for buildings.

Preferably, the element is in the form of a panel. Preferably the thickness of the panel is from 4 to 50 mm. In some embodiments, especially where the panel is used as cladding on a building, the thickness of the panel is preferably from 4 to 12 mm, more preferably from 5 to 10 mm and most preferably from 6 to 8 mm. In alternative embodiments, especially where the panel is used as an insulation panel for a wall of a ceiling, the thickness of the panel is preferably from 12 to 50 mm, more preferably from 15 to 30 mm and most preferably from 18 to 21 mm.

The present invention relates particularly to mineral fibre-containing elements that are produced by pressing and curing a mixture of mineral fibres and binder to produce a pressed board, often having a thickness of from 4 mm to 25 mm. These boards generally have a density of from 400 kg/m$^3$ to 1200 kg/m$^3$, such as 800 kg/m$^3$ to 1200 kg/m$^3$ and can be used as protective cladding on the outside of buildings. Boards for thermally and/or acoustically insulating ceiling indoor generally have a density of from 40 kg/m$^3$ to 100 kg/m$^3$.

The bonded mineral fibre products according to the present invention have very low (reduced) thermal conductivity. The thermal conductivity in a typical fibrous material for building application is calculated cf. a standard calculation made by Kumaran of 1996, as referred to in the Ph.D. thesis by Susanne Dyrbøl. The thermal conductivity of these calculation gives results of 45-70 mW per m*K for material densities of 450 to 850 kg/m$^3$, such as 55-60 mW per m*K for material densities of 500 to 650 kg/m$^3$ with a well defined calculated raise in thermal conductivity when increasing the density.

The thermal conductivity of the mineral fibre products according to the present invention is however found to be substantially lower. For example, it is found that there is a value around 40 mW per m*K for material densities of 500 to 650 kg/m$^3$.

An apparatus suitable for carrying out the method of the invention generally comprises:

a mineral fibre-forming apparatus for producing a supply of fibres entrained in air, binder supply apparatus for supplying binder to the fibres,
a first collector arranged to receive the fibres from the fibre-forming apparatus,
suction apparatus for applying suction through the collector and thereby collecting the fibres on the collector as a web,
a disentanglement apparatus for disentangling the web to provide disentangled fibres,
web supply apparatus for supplying the web to the disentanglement apparatus,
air supply apparatus for supplying a primary air flow in which to suspend disentangled mineral fibres,
a second collector for collecting the disentangled mineral fibres and binder,
and a press for pressing the collected disentangled mineral fibres and binder.

The mineral fibre-forming apparatus can be any apparatus suitable for that purpose, for example, a cascade spinner or a spinning cup. In preferred embodiments of the apparatus, the mineral fibre-forming apparatus is a cascade spinner. In each case, a mineral melt is supplied and fibres are produced by the effect of centrifugal action of the apparatus.

The binder supply means supplies binder to the mineral fibres. It can be positioned at any point before the second collector, for instance, between fibre-forming apparatus and the first collector. In another embodiment, the binder supply means is positioned between the first collector and the second collector. In another preferred embodiment, the binder supply means is positioned between the first collector and the disentanglement means. If there are two disentanglement, the binder supply means may, for instance, be positioned before the first disentanglement means, between the first and second disentanglement means, or preferably between the second disentanglement means and the second collector.

The first collector is preferably in the form of a continuously operated first conveyor belt. The belt is pervious to air. The fibres form a primary web on the belt. Suction means are positioned behind the first collector to allow an air flow through the collector.

The apparatus may optionally comprise means for treating the primary web in any manner known to the person skilled in the art. For example, the apparatus can comprise a pendulum belt for cross-lapping the primary web onto a further continuously operated conveyor belt, to form a secondary mineral fibre web.

In a preferred embodiment, the first collector is in the form of a conveyor belt leading to an inlet duct. The inlet duct may have conveying rollers at its upper edge to assist with the movement of the mineral fibres through the inlet duct.

Between the first collector and the disentanglement apparatus, in some embodiments, there is a substantially vertical duct. Often the substantially vertical duct will be narrower at its lower end than at its upper end.

The apparatus comprises disentanglement means for disentangling the primary or secondary web to form disentangled fibres. In one embodiment, the disentanglement apparatus has a first duct for carrying the primary or secondary web and a second duct adjoined to the first duct. In this embodiment, the disentanglement apparatus comprises means for supplying an air flow in the second duct with a higher speed than is present in the first duct.

In particular, the disentanglement means can be in the form of a roller as described in relation to the method of the invention. Any of the preferred or optional features of the roller described in relation to the method are equally applicable to the first novel apparatus of the invention.

Furthermore, the first apparatus can comprise a cylindrical chamber that houses the roller. Any of the features of the cylindrical chamber that are described in relation to the method of the invention are equally applicable in relation to the first apparatus.

The apparatus also requires air supply means for supplying the primary air flow. This air supply means can be formed as part of the disentanglement apparatus. For example, the means for supplying an air flow in the second duct with a higher speed than is present in the first duct could also be the supply of the primary air flow.

It is also possible for the roller to act as the means for generating the primary air flow itself as it creates a flow of disentangled mineral fibres suspended in an air flow.

In the apparatus, a further air flow supply means may be present for supplying a further air flow to the primary air flow.

The apparatus preferably comprises a sifting chamber as described in relation to the method of the invention. The further air flow supply means, when present, are preferably positioned at the lower end of the sifting chamber and configured to supply an upwards flow of air within the sifting chamber. The primary air flow supply means is preferably positioned at the side of the sifting chamber and is configured to supply an air flow laterally across the chamber.

When present, the further air flow supply means may have a gauze disposed across its opening to prevent the entry of solid materials.

At the lower end of the sifting chamber, there is preferably a discharge opening into which heavy pellets or compacted fibres fall.

In preferred embodiments, the mineral fibres and binder enter the sifting chamber together at one side suspended in the primary air flow. The mixture is then blown upwards and further mixed by a further air supply means positioned at the lower end The removal duct leads eventually to a second collector. The collector may be in the form of a forarninous belt, behind which suction means are positioned.

Alternatively, the collection means could comprise a cyclone chamber capable of separating the mixture of mineral fibres and from the primary air flow. In this embodiment, the cyclone chamber has an opening at its lower end, through which the mixture is ejected, whilst the air flow is removed through a duct at the upper end. The cyclone chamber has a greater diameter at its upper end than at its lower end. In one embodiment the mixture is ejected from the cyclone chamber onto a conveyor belt.

There is preferably a further disentanglement apparatus positioned to receive the mixture of mineral fibres and binder. The further disentanglement apparatus may have any of the preferred features described in relation to the disentanglement apparatus for disentangling the collected web of mineral fibres.

Preferably, the further disentanglement apparatus is positioned to receive the mineral fibres from the opening at the lower end of the cyclone chamber.

Preferably, there is a forming chamber positioned to receive fibres and binder from the further disentanglement apparatus. Preferably, the forming chamber comprises a foraminous conveyor belt for collecting the mixture of mineral fibres and binder. It is preferred to provide scalping means prior to the press. The apparatus can be configured to recycle the scalped material.

The apparatus comprises a press for pressing and curing the collected mixture of mineral fibres and binder. The press is suitable for pressing the element to a density of, for instance, from 120 kg/m$^3$ to 1000 kg/m$^3$, such as 170 kg/m$^3$ to 1000 kg/m$^3$. Generally, the press is adapted to heat the element in order to cure the binder.

The invention will be described in the following by way of example and with reference to the drawings in which

Figure 1 is a schematic drawing of an apparatus for fibre separating and mixing raw materials.

Figure 2 is a schematic drawing of a further disentanglement apparatus as described above.

Fig. 3 is a graph showing the variation of thermal conductivity (lambda value) with the density of a composite manufactured using a polyisocyanurate-based binder according to the present invention.

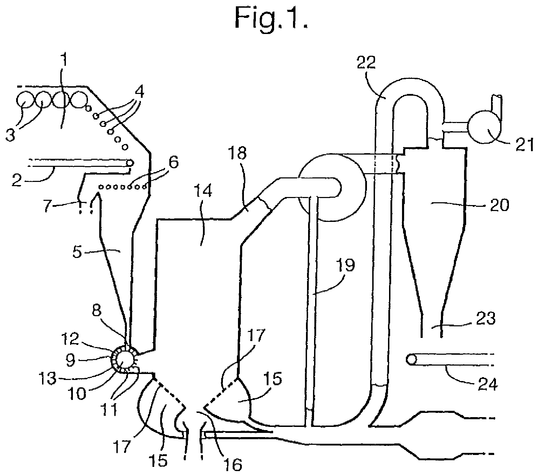

An apparatus suitable for use in the method of the present invention can be seen in Fig. 1, where a fibre-forming apparatus and collector are configured to carry a mineral fibre web to the inlet duct 1, a binder supply means is positioned to supply binder to the mineral fibres to the inlet duct, the apparatus shown could also form part of the apparatus.

The apparatus comprises an inlet duct 1 for starting materials, e.g. binder and mineral fibres and for specific raw materials the apparatus may comprise a shredder (not shown) at the inlet duct 1 to at least partly cut up bulky material. At the lower edge of the inlet duct, there is a conveyor 2 that carries the starting materials through the inlet duct 1. At the upper edge of the inlet duct, conveying rollers 3 assist with feeding the starting materials through the inlet duct 1. At the end of the inlet duct 1, a first set of mutually spaced elongate elements 4 extend across the end of the inlet duct I. These serve to break up larger pieces of the starting materials, for example the mineral fibre web. In some embodiments, the elongate elements 4 are in the form of rotating brushes that draw the starting materials between them as they rotate.

The starting materials that pass through the end of the inlet duct then fall downwards into a substantially vertical duct 5. In the embodiment shown, a second set of mutually spaced elongate elements 6 extend across the upper end of the duct. The second set of elongate elements is usually more closely spaced than the first. In the embodiment shown, the second set of elongate elements rotate so as to allow sufficiently small pieces of the mineral fibre web to pass through, but carry larger pieces away via a starting material recycling duct 7.

The vertical duct 5 generally becomes narrower at its lower end. In the embodiment shown, the lower end of the vertical duct forms the inlet 8 to the substantially cylindrical chamber 9. As shown, the inlet 8 is at an upper part of the substantially cylindrical chamber 9. In use, starting materials pass through the vertical duct 5 and through the inlet 8 into the cylindrical chamber 9.

In an alternative embodiment the vertical duct 5 is omitted. Instead a feeding mechanism is provided for feeding in a web of fibres directly to the cylindrical chamber 9. The feeding mechanism may for example comprise a conveyor belt and optionally one or more feed rollers arranged for controlled advancing and guiding of the web into the cylindrical chamber 9.

The cylindrical chamber 9 houses a roller 10 having spikes 11 protruding from its circumferential surface 12. The roller 10 shown in Figure 1 rotates anticlockwise as shown in the drawing, so that starting materials are carried from the inlet 8 around the left side of the roller 10 as shown and thrown out laterally in a primary air flow into a sifting chamber 14. The cylindrical chamber 9 and the roller 10 together form the disentanglement means.

The spikes may be permanently fixed to the roller for optimum resistance to wear and tear. For example the spikes may be fixed by gluing or welding the spikes in blind holes arranged in the roller outer periphery. Alternatively the spikes may be replaceable. This can for example be accomplished by the roller being a hollow cylinder with through holes in the cylindrical wall. The spikes can then for example have a head and be inserted through the holes from inside through the holes. Hereby spikes can be replaced if they are broken or worn. Further by having replaceable spikes it is possible to change the pattern of the spikes. Hereby it is possible to optimize the pattern for different types of material to be disentangled, e.g. loose mineral wool fibres, or a collected web of mineral wool fibres impregnated with a liquid binder.

In the embodiment shown, the primary air flow is created by the rotation of 5 the roller 10 within the cylindrical chamber 9, and in particular by the movement of the spikes 11 and starting material through the space between the circumferential surface of the roller and the curved wall 13 of the cylindrical chamber 9.

The sifting chamber 14 shown in Figure 1 comprises a discharge opening 16 and further air flow supply means 15. The further air flow supply means 15 comprise openings through which the further air flow is supplied. Gauzes 17 are disposed across the openings of the further air flow supply means 15. These gauzes allow the further air flow to pass through into the sifting 15 chamber 14, but are intended to prevent the entry of materials into the supply means. The further air flow supply means 15 shown direct the further air flow upwards into the sifting chamber 14.

The further air flow meets the primary air flow containing the disentangled fibres in the sifting chamber. The further air flow has the effect of carrying the mixture of disentangled fibres and binder upwards within the sifting chamber 14. Some more compacted fibres and pearls of mineral material will not be carried upwards in the sifting chamber, but fall to the lower end and through the discharge opening 16.

The desired mixture of disentangled fibres and binder is carried to the upper part of the sifting chamber 14 where a removal duct 18 is positioned to carry the mixture from the sifting chamber 14. A first air recycling duct 19 is adjoined to the removal duct 18 and recycles some of the air from the removal duct 18 back to the further air supply means 15.

The removal duct leads to a cyclone chamber 20. The cyclone chamber 20 has a second air recycling duct 22 leading from its upper end to the further air supply means 15. A filter 21 is adjoined to the second air recycling duct. In use, the filter 21 removes any stray mineral fibres and binder from the second air recycling duct 22. As air is removed from the upper end of the cyclone chamber 20, the mixture of disentangled fibres and binder falls through a cyclone chamber outlet 23 at the lower end of the cyclone chamber 20.

A collector 24 is positioned below the cyclone chamber outlet 23. In the embodiment shown, the collector 24 is in the form of a conveyor, which carries the collected fibres and binder to a pressing and curing apparatus (not shown).

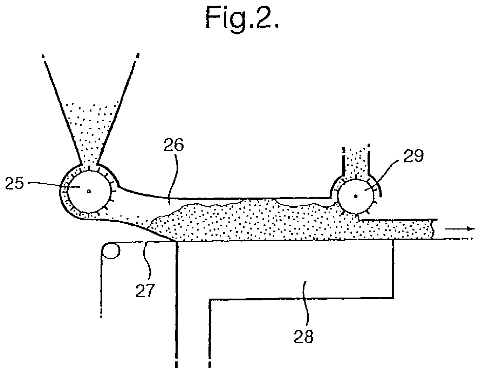

Figure 2 shows an embodiment of the further disentanglement apparatus, which may optionally be used in the method. The further disentanglement apparatus can be positioned in place of collector 24 as shown in Figure 1. The further disentanglement apparatus shown comprises roller 25, which is the same as roller 10 in structure. The mixture of components is fed to roller 25 from above and thrown out into forming chamber 26. At its lower end, the forming chamber 26 comprises a foraminous conveyor belt 27, below which suction means 28 are positioned. Scalper 29 is positioned to scalp the top of the mixture to provide an even surface. The scalped material can then be recycled. Foraminous conveyor belt 27 carries the mixture to a press (not shown).

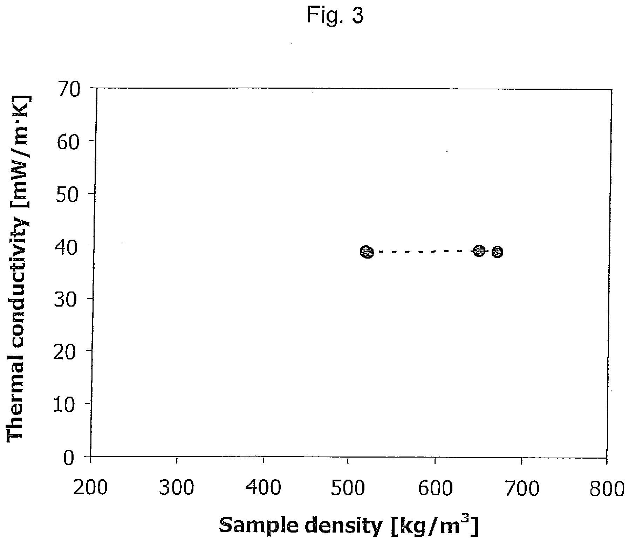

Figure 3 shows the variation of thermal conductivity with the density of a composite manufactured using a two-component polyisocyanurate-forming binder with a relative content of 30 g of modified isocyanate and 100 g of additives.

The measured lambda values for the products made are listed in the Table 1 below.

Table 1

| Wool wt(%) | Binder content wt(%) | Thickness mm | Density kg/m³ | Lambda 10 mW/m*K |
|---|---|---|---|---|
| 94 | 6 | 7.35 | 518 | 39 |
| 94 | 6 | 7.32 | 520 | 38.8 |
| 83.5 | 16.5 | 7.36 | 669 | 39.01 |
| 82.5 | 17.5 | 7.37 | 648 | 39.08 |

**Claims**

1. A method for manufacturing a bonded mineral fibre product having reduced thermal conductivity, said method comprising the steps of:

   providing mineral fibres in the form of a collected web,
   subjecting the collected web of fibres to a disentanglement process, suspending the fibres in a primary air flow,
   mixing a polyisocyanurate-forming binder composition with the mineral fibres before, during or after the disentanglement process to form a mixture of mineral fibres and binder,
   collecting the mixture of mineral fibres and binder, and

pressing and curing the mixture to provide a consolidated composite of mineral fibres bonded with a polyisocyanurate-based binder.

2. A method according to claim 1, wherein the disentanglement process comprises feeding the web from a duct with a lower relative air flow to a duct with a higher relative air flow.

3. A method according to claim 1, wherein the speed of the higher relative air flow is from 20 m/s to 150 m/s, preferably from 30 m/s to 120 m/s, more preferably from 40 m/s to 80 m/s, most preferably from 50 m/s to 70 m/s.

4. A method according to claim 1 or 2, wherein the disentanglement process comprises feeding the collected web to at least one roller which rotates about its longitudinal axis and has spikes protruding from its circumferential surface.

5. A method according to any one of claims 1 to 4, wherein the roller has a diameter based on the outermost points of the spikes of from 20 cm to 80 cm, preferably from 30 cm to 70 cm, more preferably from 40 cm to 60 cm and most preferably from 45 cm to 55 cm.

6. A method according to claim 4 or 5, wherein the roller rotates at a rate of from 500 rpm to 5000 rpm, preferably from 1000 rpm to 4000 rpm, more preferably from 1500 rpm to 3500 rpm, most preferably from 2000 rpm to 3000 rpm.

7. A method according to any one of claims 4 to 6 , wherein the outermost points of the spikes of the roller move at a speed of from 20 m/s to 150 m/s, preferably from 30 m/s to 120 m/s, more preferably from 40 m/s to 80 m/s, most preferably from 50 m/s to 70 m/s.

8. A method according to any one of claims 1 to 7, wherein the polyisocyanurate-forming binder composition is a two-component binder with the first component containing an emulsifiable polyisocyanate and the second component being an aqueous mixture comprising a catalyst system, a surfactant and a silane coupling agent.

9. A method according to any one of claims 1 to 8, wherein the mixing of the polyisocyanurate-forming binder composition with the mineral fibres takes place before the disentanglement process to form a mixture of mineral fibres and binder.

10. A method according to any one of claims 1 to 3, wherein the mineral fibres and binder, when suspended in the primary air flow, are subjected to a further air flow in a different direction to the primary air flow.

11. A method according to claim 10, wherein the primary air flow is generally lateral and the further air flow is generally upwards.

12. A method according to any one of claims 1 to 11, wherein the primary air flow has an initial speed of from 20 m/s to 150 m/s, preferably from 30 m/s to 120 m/s, more preferably from 40 m/s to 80 m/s, most preferably from 50 m/s to 70 m/s.

13. A method according to any of claims 1 to 12, wherein the further air flow has a speed of from 1 to 20 m/s, preferably from 1 to 13 m/s, more preferably from 2 to 9 m/s, most preferably from 3 to 7 m/s.

14. A bonded mineral fibre product having reduced thermal conductivity obtainable by the method according to any one of claims 1 to 13.


**Patentansprüche**

1. Verfahren zur Herstellung eines gebundenen Mineralfaserprodukts mit verringerter Wärmeleitfähigkeit, wobei das Verfahren die folgenden Schritte umfasst:

Bereitstellen von Mineralfasern in Form einer gesammelten Bahn,
Unterwerfen der gesammelten Bahn von Fasern einem Entwirrungsprozess, Suspendieren der Fasern in einem primären Luftstrom,
Mischen einer Polyisocyanurat bildenden Bindemittelzusammensetzung mit den Mineralfasern vor, während oder nach dem Entwirrungsprozess, um eine Mischung aus Mineralfasern und Bindemittel zu bilden;
Sammeln der Mischung aus Mineralfasern und Bindemittel und

Pressen und Härten der Mischung, um einen konsolidierten Verbund aus Mineralfasern, die mit einem Bindemittel auf Polyisocyanuratbasis verbunden sind, bereitzustellen.

2. Verfahren nach Anspruch 1, wobei der Entwirrungsprozess das Zuführen der Bahn von einem Kanal mit einem niedrigeren relativen Luftstrom zu einem Kanal mit einem höheren relativen Luftstrom umfasst.

3. Verfahren nach Anspruch 1, wobei die Geschwindigkeit des höheren relativen Luftstroms 20 m/s bis 150 m/s, bevorzugt 30 m/s bis 120 m/s, bevorzugter 40 m/s bis 80 m/s, am meisten bevorzugt von 50 m/s bis 70 m/s, beträgt.

4. Verfahren nach Anspruch 1 oder 2, wobei der Entwirrungsprozess das Zuführen der gesammelten Bahn zu mindestens einer Rolle umfasst, die sich um ihre Längsachse dreht und Spitzen aufweist, die aus ihrer Umfangsfläche herausragen.

5. Verfahren nach irgendeinem der Ansprüche 1 bis 4, wobei die Rolle einen Durchmesser, bezogen auf die äußersten Punkte der Spitzen, von 20 cm bis 80 cm, bevorzugt 30 cm bis 70 cm, bevorzugter 40 cm bis 60 cm und am meisten bevorzugt von 45 cm bis 55 cm aufweist.

6. Verfahren nach Anspruch 4 oder 5, wobei sich die Rolle mit einer Geschwindigkeit von 500 U/min bis 5000 U/min, bevorzugt von 1000 U/min bis 4000 U/min, bevorzugter von 1500 U/min bis 3500 U/min, am meisten bevorzugt von 2000 U/min bis 3000 U/min, dreht.

7. Verfahren nach irgendeinem der Ansprüche 4 bis 6, wobei sich die äußersten Punkte der Spitzen der Rolle mit einer Geschwindigkeit von 20 m/s bis 150 m/s, bevorzugt von 30 m/s bis 120 m/s; bevorzugter von 40 m/s bis 80 m/s, am meisten bevorzugt von 50 m/s bis 70 m/s, bewegen.

8. Verfahren nach irgendeinem der Ansprüche 1 bis 7, wobei die Polyisocyanurat bildende Bindemittelzusammensetzung ein Zweikomponentenbindemittel ist, wobei die erste Komponente ein emulgierbares Polyisocyanat enthält und die zweite Komponente eine wässrige Mischung ist, die ein Katalysatorsystem, ein Tensid und einen Silan-Haftvermittler umfasst.

9. Verfahren nach irgendeinem der Ansprüche 1 bis 8, wobei das Mischen der Polyisocyanurat bildenden Bindemittelzusammensetzung mit den Mineralfasern vor dem Entwirrungsprozess stattfindet, um eine Mischung von Mineralfasern und Bindemittel zu bilden.

10. Verfahren nach irgendeinem der Ansprüche 1 bis 3, wobei die Mineralfasern und das Bindemittel, wenn sie im primären Luftstrom suspendiert sind, einem weiteren Luftstrom in einer anderen Richtung als dem primären Luftstrom ausgesetzt werden.

11. Verfahren nach Anspruch 10, wobei der primäre Luftstrom weitgehend lateral ist und der weitere Luftstrom weitgehend nach oben gerichtet ist.

12. Verfahren nach irgendeinem der Ansprüche 1 bis 11, wobei der primäre Luftstrom eine Anfangsgeschwindigkeit von 20 m/s bis 150 m/s, bevorzugt von 30 m/s bis 120 m/s, bevorzugter von 40 m/s bis 80 m/s, am meisten bevorzugt von 50 m/s bis 70 m/s, aufweist.

13. Verfahren nach irgendeinem der Ansprüche 1 bis 12, wobei der weitere Luftstrom eine Geschwindigkeit von 1 bis 20 m/s, bevorzugt 1 bis 13 m/s, bevorzugter 2 bis 9 m/s, am meisten bevorzugt 3 bis 7 m/s, aufweist.

14. Gebundenes Mineralfaserprodukt mit verringerter Wärmeleitfähigkeit, erhältlich durch das Verfahren nach irgendeinem der Ansprüche 1 bis 13.

**Revendications**

1. Procédé pour fabriquer un produit en fibres minérales liées ayant une conductivité thermique réduite, ledit procédé comprenant les étapes consistant à :

disposer de fibres minérales sous la forme d'une toile collectée,

soumettre la toile collectée de fibres à un traitement de démêlage,

mettre les fibres en suspension dans un courant d'air primaire,

mélanger une composition de liant formant un polyisocyanurate avec les fibres minérales avant, pendant ou après le traitement de démêlage pour former un mélange de fibres minérales et de liant,

collecter le mélange de fibres minérales et de liant, et

presser et durcir le mélange pour former un composite consolidé de fibres minérales liées avec un liant à base de polyisocyanurate.

2. Procédé selon la revendication 1, dans lequel le traitement de démêlage comprend l'alimentation en la toile d'une conduite ayant un écoulement d'air relatif plus faible à une conduite ayant un écoulement d'air relatif plus élevé.

3. Procédé selon la revendication 1, dans lequel la vitesse du courant d'air relatif plus élevé est de 20 m/s à 150 m/s, de préférence de 30 m/s à 120 m/s, plus préférablement de 40 m/s à 80 m/s, le plus préférablement de 50 m/s à 70 m/s.

4. Procédé selon la revendication 1 ou 2, dans lequel le traitement de démêlage comprend l'alimentation en la toile collectée d'au moins un rouleau qui tourne autour de son axe longitudinal et a des crampons faisant saillie depuis sa surface circonférentielle.

5. Procédé selon l'une quelconque des revendications 1 à 4, dans lequel le rouleau a un diamètre, basé sur les points les plus extérieurs des crampons, de 20 cm à 80 cm, de préférence de 30 cm à 70 cm, plus préférablement de 40 cm à 60 cm et le plus préférablement de 45 cm à 55 cm.

6. Procédé selon la revendication 4 ou 5, dans lequel le rouleau tourne à une vitesse de 500 t/min à 5 000 t/min, de préférence de 1 000 t/min à 4 000 t/min, plus préférablement de 1 500 t/min à 3 500 t/min, le plus préférablement de 2 000 t/min à 3 000 t/min.

7. Procédé selon l'une quelconque des revendications 4 à 6, dans lequel les points les plus extérieurs des crampons du rouleau se déplacent à une vitesse de 20 m/s à 150 m/s, de préférence de 30 m/s à 120 m/s, plus préférablement de 40 m/s à 80 m/s, le plus préférablement de 50 m/s à 70 m/s.

8. Procédé selon l'une quelconque des revendications 1 à 7, dans lequel la composition de liant formant un polyisocyanurate est un liant à deux composants dont le premier composant contient un polyisocyanate émulsionnable et le deuxième composant est un mélange aqueux comprenant un système catalyseur, un tensioactif et un agent de couplage au silane.

9. Procédé selon l'une quelconque des revendications 1 à 8, dans lequel le mélange de la composition de liant formant un polyisocyanurate avec les fibres minérales a lieu avant le traitement de démêlage pour former un mélange de fibres minérales et de liant.

10. Procédé selon l'une quelconque des revendications 1 à 3, dans lequel les fibres minérales et le liant, quand ils sont en suspension dans le courant d'air primaire, sont soumis à un autre courant d'air dans une direction différente de celle du courant d'air primaire.

11. Procédé selon la revendication 10, dans lequel le courant d'air primaire est globalement latéral et l'autre courant d'air est globalement ascendant.

12. Procédé selon l'une quelconque des revendications 1 à 11, dans lequel le courant d'air primaire a une vitesse initiale de 20 m/s à 150 m/s, de préférence de 30 m/s à 120 m/s, plus préférablement de 40 m/s à 80 m/s, le plus préférablement de 50 m/s à 70 m/s.

13. Procédé selon l'une quelconque des revendications 1 à 12, dans lequel l'autre courant d'air a une vitesse de 1 à 20 m/s, de préférence de 1 à 30 m/s, plus préférablement de 2 à 9 m/s, le plus préférablement de 3 à 7 m/s.

14. Produit en fibres minérales liées ayant une conductivité thermique réduite, pouvant être obtenu par le procédé de l'une quelconque des revendications 1 à 13.

# Fig.1.

# Fig.2.

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 583086 A
- EP 990727 A
- WO 1741726 A
- US 5318990 A
- US 20070173588 A
- WO 9936368 A
- WO 0105725 A
- WO 0196460 A
- WO 0206178 A
- WO 2004007615 A
- WO 2006061249 A
- US 4904522 A
- US 2009005517 A1
- WO 2010023060 A1
- US 5157074 A
- WO 0029459 A
- WO 04111101 A
- WO 06008780 A
- WO 0742407 A
- WO 0742411 A
- WO 0796216 A
- WO 07144291 A
- WO 2010023060 A
- US 4336341 A
- US 4540781 A
- US 6509392 B
- US 20020045690 A1
- EP 304005 A1
- EP 1004607 A1
- JP 57131276 A
- JP 58011529 A
- JP 58034832 A
- JP 58145431 A
- JP 62081590 A

**Non-patent literature cited in the description**

- **G. WOODS.** The ICI Polyurethanes Book. 1990, 32-35